# EUROPEAN PATENT APPLICATION

(11) **EP 1 555 615 A1**
(43) Date of publication of application: **20.07.2005**
(21) Application number: 03774179.0
(22) Date of filing: 25.11.2003
(51) Int. Cl.: G06F 12/00, G06F 12/14

(54) **FILE MANAGEMENT DEVICE, FILE MANAGEMENT METHOD, FILE MANAGEMENT PROGRAM, AND RECORDING MEDIUM**

(30) Priority: 25.11.2002 JP 2002340592
(71) Applicant: MATSUSHITA ELECTRIC INDUSTRIAL CO., LTD., Kadoma-shi, Osaka 571-8501 (JP)
(72) Inventor: NISHIMURA, Kozo, Settu-shi, Osaka 566-0043 (JP)
(74) Representative: Crawford, Andrew Birkby
(86) International application number: PCT/JP2003/014968
(87) International publication number: WO 2004/049167

(57) **Abstract**

A file management device that manages a file that is divided into portions and stored across a plurality of storage devices including a removable storage device that stores information in a removable recording medium thereof, the file management device comprising: an access request receiving unit operable to receive a request for accessing the file; a location identifying unit operable to identify, with reference to the information stored in the removal recording medium, locations of the file; and a file access unit operable to access the locations in response to the request.

## Description

### Technical Field

The present invention relates to a file management device that manages file access to a plurality of storage devices with different storage media, storage methods, access speeds and storage capacities, and in particularly to a technique for maintaining the security by restricting the file access.

### Background Art

Conventionally, in a storage device such as a magnetic disk, a magneto-optical disk and a static memory, the storage area is divided into a plurality of data blocks. Desired file access is realized by specifying a data block.

For the file management with use of the data blocks, different methods are adopted according to the type of the storage device, such as the magnetic disk. Therefore, different types of storage devices that should be managed demand individual file access management for each device.

For instance, Japanese Patent Publication No.3017892 discloses a file management device that allocates data blocks in all the storage devices, which should be managed, to one address space without duplication.

This file management device can unify the file-access management of all the different types of storage devices, regardless of the difference among file management methods that use the data blocks. As a result, the file management device can handle the storage devices like one storage device.

### Disclosure of the Invention

However, such an advantage of the file management device according to the above-described conventional technique, where it can handle the storage devices like one storage device, is in a way a disadvantage as well. Because, the advantage of realizing easy file access is effective not only for authorized users of the file management device, but for outsiders who try to gain unauthorized access.

In view of such a disadvantage, the present invention aims to provide a file management device that can handle different types of storage devices like one storage device and prevent the unauthorized file access. The present invention also aims to provide a file management method and a file management program used for such a file management device.

The object can be achieved by a file management device that manages a file that is divided into portions and stored across a plurality of storage devices including a removable storage device that stores information in a removable recording medium thereof, the file management device comprising: an access request receiving unit operable to receive a request for accessing the file; a location identifying unit operable to identify, with reference to the information stored in the removal recording medium, locations of the file; and a file access unit operable to access the locations in response to the request.

Regarding the file whose file management information is recorded on the removable recording medium, the stated structure can surely prevent the unauthorized access. Therefore, it can solve problems such as unauthorized reference to the file and destruction of the file.

Here, the file management device according to the present invention is characterized by that the removable storage device may store file itself, adding to the file management information. Therefore, the present invention does not require a special storage device for storing the file management information.

Here, the file management device according to the present invention is characterized by that the file is constituted of data blocks, the file management device further comprises an identifier receiving unit operable to receive an identifier of the file and identifiers of the data blocks, the identifier of the file that is stored across the storage devices except for the removal storage device, identifiers of the storage devices, and locations of the data blocks within the storage devices are recorded on the removable recording medium in association with each other, and the file access unit accesses the locations of the file by specifying the locations of the data blocks and the identifiers of the storage devices with use of the identifiers of the data blocks.

In the conventional technique, each data block is allocated and fixed to one address space. However, with the stated structure, the data blocks can be managed in units of storage devices. Therefore, it becomes easy to manage the data blocks in the case where the structures of the storage devices used for storing the file are changed for an extension of the storage devices or a removal of the storage devices.

Here, the file management device according to the present invention is characterized by that the removal recording medium has recorded thereon address information used for accessing the storage devices via a network, and the file access unit accesses the locations of the file with use of the address information.

With the stated structure, it becomes possible to access the storage device from remote places via the network. For instance, it becomes possible to access a file in a storage device that is connected to a terminal device for ordinary use from another terminal device, via a network.

In this case, if the file access is realized by transferring the storage device that stores the file management information from the terminal device for ordinary use to the other terminal device, it is possible to prevent the unauthorized access via the network, and permit the file access by authorized users.

A file management method according to the present invention is a file management method used for managing a file that is divided into portions and stored across a plurality of storage devices including a removable storage device that stores information in a removable recording medium thereof, the file management method comprising steps of: receiving a request for accessing the file; identifying, with reference to the information stored in the removable recording medium, locations of the file; and accessing the locations in response to the request.

With the stated method, it is possible to surely prevent the unauthorized access to the file whose file management information is recorded in the removable recording medium, by removing the removable recording medium.

A file management program according to the present invention is a file management program used for managing a file that is divided into portions and stored across a plurality of storage devices, which include a removable storage device that stores information in a removable recording medium thereof, the file management program enabling a computer to perform steps of: receiving a request for accessing the file; identifying, with reference to the information stored in the recording medium, locations of the file; and accessing the locations in response to the request.

With the stated program, it is possible to surely prevent the unauthorized access to the file whose file management information is stored in the removable recording medium, by removing the removable recording medium. Therefore, it can solve problems such as unauthorized reference to the file and destruction of the file.

A file management device according to the present invention is a file management device that controls access to a file stored in a storage device that has two or more storage units, the file management device comprising: an access request receiving unit operable to receive a request for accessing the file; a management information acquiring unit operable to access the storage units and acquire management information relating to the file from one of the storage units; and an access unit operable to access the file according to the management information.

Here, the file management device according to the present invention is characterized by that the management information includes: identification information used for identifying, from the storage units, file storage units across which the file is stored; and location information that indicates locations of the file.

Here, the file management device according to the present invention is characterized by that the location information is indirect information, with which the file access unit can not access the file directly, the file management device further comprises a location information acquiring unit operable to access the file storage units with reference to the indirect information, and acquire, from one of the storage units, direct location information, with which the file access unit can access the file directly, and the access unit accesses the file according to the direct location information.

Here, the file management device according to the present invention is characterized by that the file storage units identified by the identification information are different from the one of the storage units which stores the management information.

A recording medium according to the present invention is a recording medium having recorded thereon management information, the management information comprising: identification information used for identifying a recording medium that stores a file; and location information that indicates a location of the file.

### Brief Description of the Drawings

FIG.1 is a block diagram showing a functional structure of a file management device according to the first embodiment of the present invention;
FIG. 2 shows a data structure of file management information according to the first embodiment of the present invention;
FIG. 3 is a flowchart showing a flow of processing executed by a file management device according to the first embodiment;
FIG.4 is a flowchart showing a flow of processing performed by a file management information detection unit 102 according to the first embodiment for detecting file management information;
FIG. 5 is a flowchart showing a flow of processing performed by the data block detection unit 103 according to the first embodiment for detecting location information of a data block;
FIG. 6 shows a data structure of file management information according to the second embodiment of the present invention;
FIG. 7 shows a data structure of file management information according to the third embodiment of the present invention; and
FIG.8 shows an example device structure of a file management device according to a practical example of the present invention.

### Best Mode for Carrying Out the Invention

### 1. The First Embodiment

The following describe an embodiment of the present invention, with reference to drawings.

### 1-1. Functional Structure of File Management Device

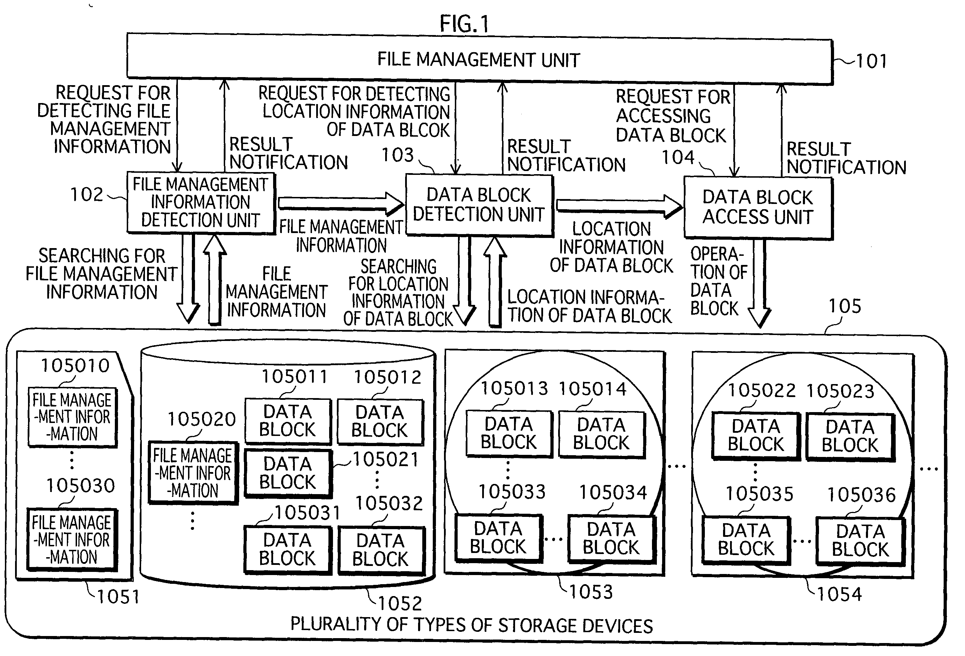

FIG.1 is a block diagram showing a functional structure of a file management device according to the first embodiment of the present invention.

As FIG.1 shows, a file management device according to the present invention includes a file management unit 101, a file management information detection unit 102, a data block detection unit 103 and a data block access unit 104. The file management device manages file access to a plurality of storage devices 105.

The file management unit 101 is a functional block that receives requests for writing files into the storage devices 105, reading files from the storage devices 105, deleting files stored in the storage devices 105, and so on. After receiving such requests, the file management unit 101 instructs the file management information detection unit 102 and so on to process the request, and thereby executes the processing.

The file management information detection unit 102 is a functional block that receives a request for detecting file management information from the file management unit 101 and detects the file management information.

The data block detection unit 103 is a functional block that receives a request for acquiring location information of a data block from the file management unit 101 and detects the location information of the data block in response to the request, with reference to the file management information detected by the file management information detection unit 102.

The data block access unit 104 is a functional block that receives a request for accessing the data block from the file management unit 101 and accesses the data block in response to the request, with reference to the location information of the data block detected by the data block detection unit 103.

The plurality of storage devices 105 include storage devices 1051, 1052, 1053, 1054 and so on.

The storage device 1051 stores pieces of file management information including file management information 105010 and file management information 105030.

The storage device 1052 includes a plurality of data blocks including data blocks 105011, 105012, 105021, 105031 and 105032. The storage device 1052 also stores pieces of file management information including file management information 105020.

The storage device 1053 stores a plurality of data blocks including data blocks 105013, 105014, 105033 and 105034. The storage device 1054 stores a plurality of data blocks such as data blocks 105022, 105023, 105035, and 105036.

### 1-2. Data Structure of File Management Information

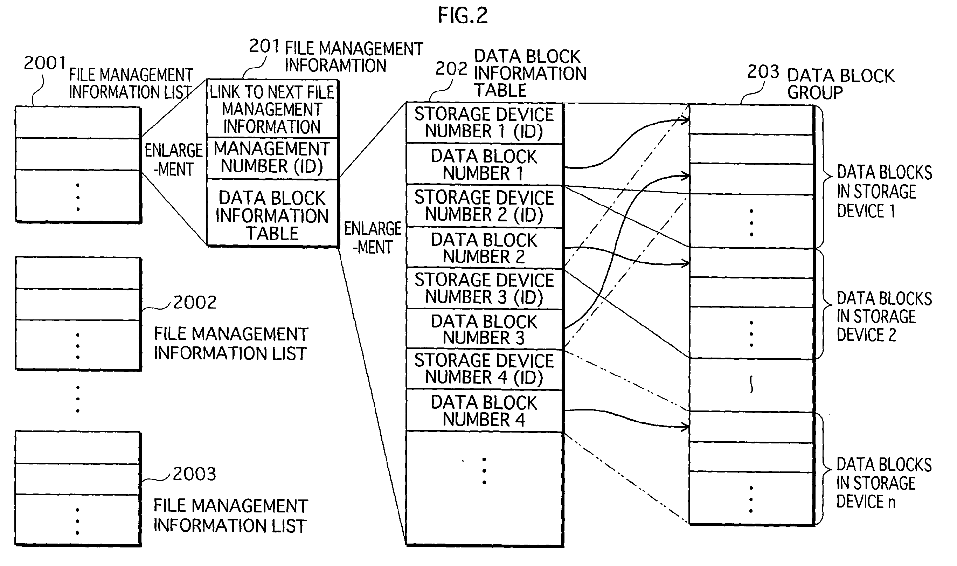

The data structure of the file management information stored by the storage devices 1051 and 1052 and so on is described next. FIG.2 shows the data structure of the file management information according to the embodiment.

The storage devices according to the embodiment store the file management information in the form of file management information lists, in each of which pieces of file management information are listed. FIG.2 shows the file management information lists 2001, 2002 and 2003 as examples.

Note that all the storage devices in the embodiment store the file management information list. The file management information list may be an empty list that includes no file management information.

The file management information list 2001 includes file management information 201. The file management information 201 includes link information that indicates the position of the next file management information so as to form the file management information list 2001.

The file management information 201 also includes a management number. The management number is used for identifying a file. A unique number is given to each of the files stored in the storage devices 105. In the embodiment, a value that indicates a file name, a file attribute, file creation data and so on is used as the management number.

The file management information 201 also includes a data block information table 202. The data block information table 202 identifies the data block that stores file relating to the file management information 201, with use of a storage device number of the storage device that stores the data block, and a data block number defined in the storage device relating to the storage device number.

Each of the storage devices included in the storage devices 105 has a unique storage device number. Each of the data blocks stored in each storage device has a unique data block number.

Here, the data blocks stored in different storage devices may have the same data block number, because such data blocks are distinguishable from each other by the storage device numbers. In this way, each data block included in the data block group 203 is identified by the storage device number of the device that includes the data block, and the data block number.

In the embodiment, the data block numbers included in one data block information table 202 are arranged according to the order in which the corresponding data blocks in the file are arranged. For instance, the data block number of the data block positioned at the beginning of the file is arranged at the beginning of the data block information table.

The data block number of the data block positioned at the end of the file is arranged at the end of the data block information table. In the same way, the data block number of the data block at another position in the file is arranged at the corresponding position in the data block information table.

### 1-3. File Access Method

A file access method with use of the file management device according to the embodiment is described next. File reading, file deletion, and file transfer among storage devices are taken as examples.

### (1) File Reading

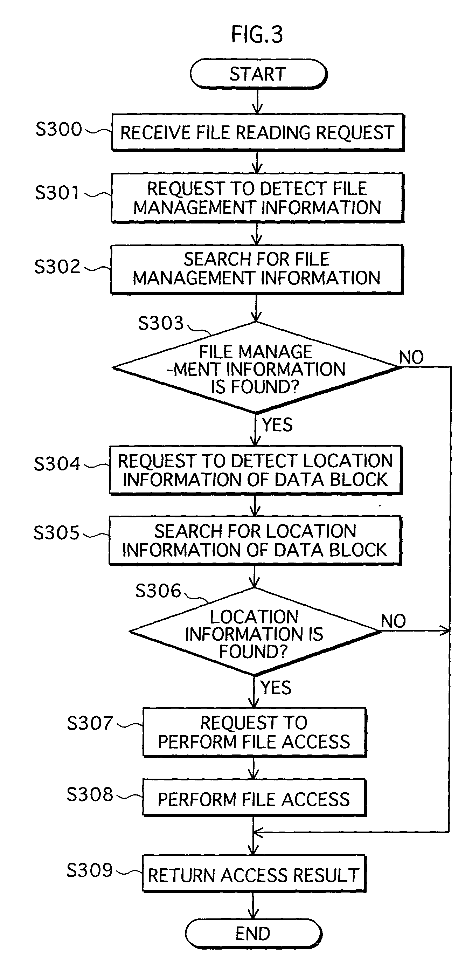

FIG.3 is a flowchart showing the flow of processing executed by the file management device after the file management unit 101 receives a file reading request.

Upon receiving the file reading request accompanied by specifications of the file and the data blocks (Step 5300), the file management unit 101 included in the file management device requests the file management information detection unit 102 to detect the file management information of the specified file (Step S301).

The file management information detection unit 102 searches for the file management information in response to the request, with reference to the file management information list stored in the storage devices 105 (Step S302). If the file management information is not found by the search (Step S303: NO), the file management information detection unit 102 notifies the file management unit 101 of the search result.

Upon receiving the notification from the file management information detection unit 102, the file management unit 102 notifies the request source of the search result (Step S309), and finishes the processing.

If the file management information is found by the search (Step S303: YES), the file management information detection unit 102 notifies the file management unit 101 of the search result. Upon receiving the notification from the file management information detection unit 102, the file management unit 101 requests the data block detection unit 103 to detect the location information (address) of the specified data block (Step S304).

Upon receiving the request from the file management unit 101, the data block detection unit 103 searches for the location information of the specified data block, with reference to the file management information detected by the file management information detection unit 102 (Step S305).

If the location information of the data block is not found by the search (Step S306: NO), the data block detection unit 103 notifies the file management unit 101 of the search result. Upon receiving the notification from the data block detection unit 103, the file management unit 101 notifies the request source of the search result (Step S309), and finishes the processing.

If the location information of the data block is found by the search (Step S306: YES), the data block detection unit 103 notifies the file management unit 101 of the search result. Upon receiving the notification from the data block detection unit 103, the file management unit 101 requests the data block access unit 104 to perform file access for reading data from the data block according to the location information (Step S307).

Upon receiving the request from the file management unit 101, the data block access unit 104 performs the file access according to the request (Step S308). In other words, the data block access unit 104 reads out data from the data block according to the location information detected by the data block detection unit 103, and passes the read-out data to the file management unit 101.

Upon receiving the data from the data block access unit 104, the file management unit 101 returns the data, as an access result, to the request source (Step S309), and finishes the processing.

### (1-1) Processing by File Management Information Detection Unit 102

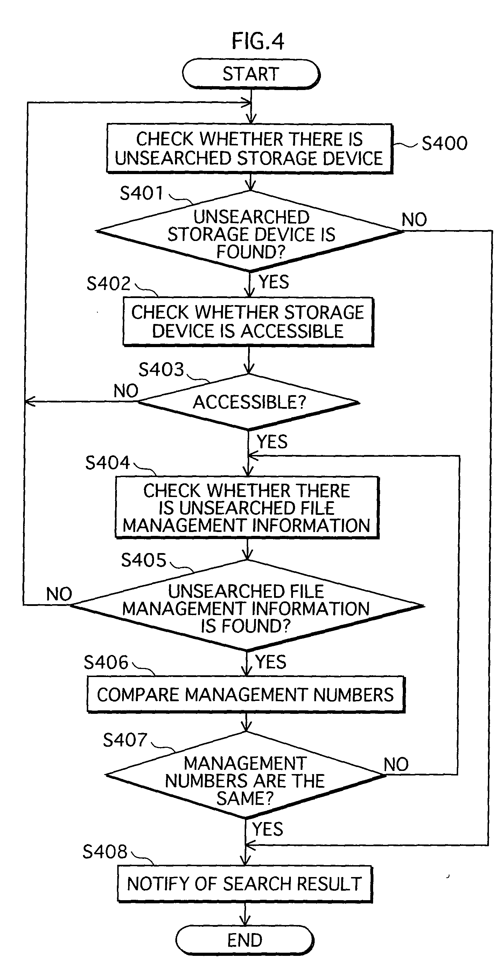

The processing performed by the file management information detection unit 102 for detecting the file management information in response to the request from the file management unit 101 is described next in detail. FIG.4 is a flowchart showing the flow of the processing performed by the file management information detection unit 102 for detecting the file management information in response to the request from the file management unit 101.

As FIG. 4 shows, the file management information detection unit 102 checks whether there is an unsearched storage device (Step S400). If no unsearched storage device is found by the check (Step S401: NO), the file management information detection unit 102 notifies the file management unit 101 of the check result showing that no unsearched storage device is found (Step S408), and finishes the processing.

If an unsearched storage device is found by the check (Step S401: YES), the file management information detection unit 102 checks whether the storage device is accessible (Step S402). If the storage device is not accessible because the device is removed for instance (Step S403: NO), the processing by the file management information detection unit 102 jumps to the Step S400 for searching for another unsearched storage device.

If the storage device is accessible (Step S403: YES), the file management information detection unit 102 checks whether there is unsearched file management information, with reference to the file management information list stored in the storage device (Step S404).

If no unsearched file management information is found by the check (Step S405: NO), the processing by the file management information detection unit 102 jumps to Step S400 for searching for another unsearched storage device.

If unsearched file management information is found by the check (Step S405: YES), the file management information detection unit 102 refers to the management number included in the file management information, and compares the management number with the management number relating to the request from the file management unit 101 (Step S406).

As the result of this comparison, if the management numbers are not the same (Step S407: NO), the processing by the file management information detection unit 102 jumps to Step S404, and checks whether unsearched file management information is included in the file management information list stored in the storage device.

As the result of the above-described comparison, if the management numbers are the same (Step S407: YES), the file management information detection unit 102 notifies the file management unit 101 of the processing result showing that the requested file management information is detected (Step S408), and finishes the processing.

### (1-2) Processing by Data Block Detection Unit 103

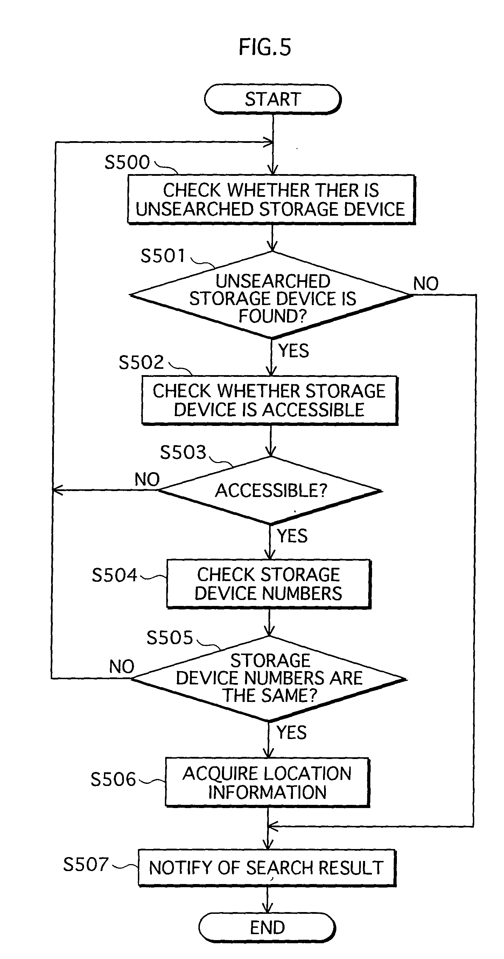

Next, the processing performed by the data block detection unit 103 for detecting the location information of the data block in response to the request from the file management unit 101 is described in detail. FIG.5 is a flowchart showing the flow of processing performed by the data block detection unit 103 for detecting the location information of the data block in response to the request from the file management unit 101.

As FIG.5 shows, the data block detection unit 103 checks whether there is an unsearched storage device in response to the request from the file management unit 101 (Step S500). If no unsearched storage device is found by the check (Step S501: NO), the data block detection unit 103 notifies the file management unit 101 of the check result showing that no file management information can be found (Step S507), and finishes the processing.

If an unsearched storage device is found by the check (Step S501: YES), the data block detection unit 103 checks whether the storage device is accessible (Step 5502). If the storage device is not accessible (Step S503: NO), the processing by the data block detection unit 103 jumps to Step S500 and searches for another unsearched storage device.

If the storage device is accessible (Step S503: YES), the data block detection unit 103 refers to the storage device number of the storage device, and checks whether the storage device number is the same as the storage device number relating to the request from the file management unit 101 (Step S504).

If the storage device numbers are not the same (Step S505: NO), the processing by the data block detection unit 102 jumps to Step S500 for searching another unsearched storage device.

If the storage device numbers are the same (Step S505: YES), the data block detection unit 103 acquires the location information (address) corresponding to the data block number included in the file management information (Step S506).

Then, the data block detection unit 103 notifies the file management unit 101 of the processing result showing that the location information is acquired by the data block detection unit 103 (Step S507), and finishes the processing.

### (2) File Deletion

File deletion with use of the file management device according to the embodiment is described next.

Upon receiving a file deletion request accompanied by a specification of the file with use of the management number, the file management unit 101 requests the file management information detection unit 102 to detect the file management information relating to the management number.

After the file management information detection unit 102 detects the file management information, the file management unit 101 requests the data block detection unit 103 to detect the location information of the data block corresponding to the data block number included in the file management information.

After the data block detection unit 103 detects the location information of the data block, the file management unit 101 requests the data block access unit 104 to release the data block relating to the location information.

After making such a request with respect to all the data blocks that have the data block numbers which are included in the file management information detected by the file information detection unit 102, the file management unit 101 deletes the files relating the request by deleting the file management information.

### (3) File Transfer among Storage Devices

File transfer among the storage devices according to the embodiment is described next.

Upon receiving a request for file transfer, the file management unit 101 checks whether there is a free data block in the destination storage device. If there is such a data block, the file management unit 101 reads out the data from the data block of the source' storage device, and writes the data into the data block of the destination storage device.

After this writing finishes, the file management unit 101 replaces the storage device number and the data block number of the source storage device, which are included in the data block information table 202 of the file management information, with the storage device number and the data block number of the destination storage device. After this replacement, the file management unit 101 releases the data blocks of the source storage device.

The file management unit 101 repeats the above-described processing until all the data blocks that store the data relating to the file are removed from the source storage device.

This prevents files from being damaged or lost in the case where the file transfer is interrupted by a power failure and so on. Also, it is easy to update the file management information accompanying the file transfer, and therefore it is possible to transfer files efficiently.

Further, by making the file transfer among storage devices possible, it becomes possible to carry away files with use of a storage device, such as a so-called removal medium, by transferring the files into the storage device. Conversely, it also becomes possible to bring in files with use of the removable medium.

### 1-4. Summary

In the file management device disclosed by the above-described conventional technique, each data block is allocated and fixed to one address space. Therefore, for replacing the existing storage devices with other storage devices, it is necessary to change the manner of allocating the data blocks to the address space.

In contrast, the embodiment of the present invention uses the storage device number for identifying the position of the data block. Therefore, it is possible to replace the storage devices that are included in the plurality of types of the storage devices 105 without such a trouble.

Further, the file management device according to the embodiment of the present invention can separately store data blocks that are included in one file in a plurality of storage devices.

Therefore, if a whole file can not be stored in one storage device, it is possible to store the rest of the file that can not be stored in the storage device in other storage device, which means that the file management device can manage files without restriction on the storage capacity of each storage device.

Accordingly, the file management device can store and manage a large file that can not be stored in any one of the storage devices. Also, in the case where the file is separately stored in the plurality of storage devices, it is easy to delete the file as described above. In this way, the embodiment of the present invention can ease the restrictions of the storage capacity, and realize flexible file management.

Also, even if each file is separately stored in a plurality of storage devices, the file management device can manage files more effectively than a conventional file management method and so on that uses a piece of file management information for each storage device, because the file management device according to the embodiment uses only one piece of file management information for managing all the files. Further, the file management device can avoid a problem where the file management becomes impossible because of mismatch among pieces of the file management information.

Note that although the file management information list has a list structure in the embodiment, it may have an array structure with a fixed length instead. Also note that although the data block information table 202 has an array structure in the embodiment, it may have a list structure instead.

### 2. The Second Embodiment

The second embodiment of the present invention is described next. A file management device according to the second embodiment is basically the same as the file management device according to the first embodiment. However, the file management device according to the second embodiment is characterized by that it accesses storage devices connected to other electronics devices via a network.

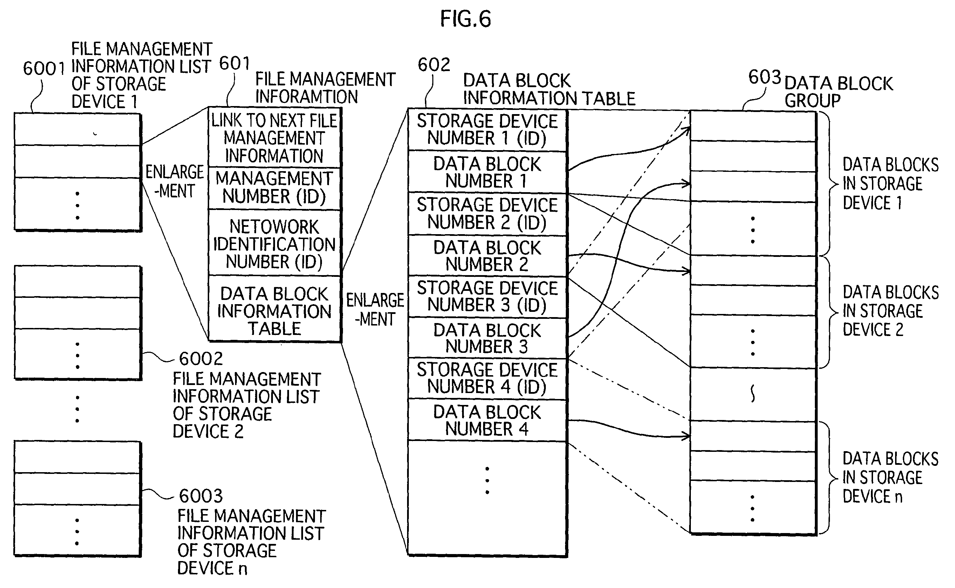

FIG. 6 shows a data structure of file management information according to the second embodiment. As FIG.6 shows, file management information 601 according to the second embodiment includes link information that links the file management information to the next filemanagement information, a management number, and a data block information table, just as the file management information 201 includes. The file management information 601 further includes a network identification number. The network identification number identifies an electronics device to which a storage device relating to a data block information table 602 is connected, and the number is used for accessing to the electronics device via the network.

The structure of the file management device according to the second embodiment is the same as the structure of the file management device according to the first embodiment (see FIG.1). However, the operations by the data block detection unit and the data block access unit are different from those in the first embodiment.

In the case where the network identification information according to the file management information detected by the file management information detection unit indicates other electronics device, the data block detection unit according to the second embodiment accesses the indicated device via the network. Then, the data block detection unit detects the location information of the data block identified by the storage device number and the data block number which are listed in the data block information table.

After the data block detection unit detects the location information of the data block, the data block access unit accesses the electronics device via the network, and accesses the data block relating to the location information.

This realizes file access between electronics devices connected to each other via the network. Also, the structure of the storage devices of the electronics devices can be changed flexibly by storing the file management information in the storage device as well as the data block.

Also, the second embodiment can be realized by only adding a field for the network identification number into the file management information 601, which means that the above-described functions can be realized easily.

As the above-describe network identification number, an IP address (internet protocol address), a MAC address (media access control address), or a host name of the electronics device can be used, for instance. A code used for acquiring such information from a database can be used as the network identification number as well.

### 3. The Third Embodiment

The third embodiment of the present invention is described next. The file management device according to the third embodiment is basically the same as the file management device according to the second embodiment. However, the way of handling the network identification number is different from that in the second embodiment.

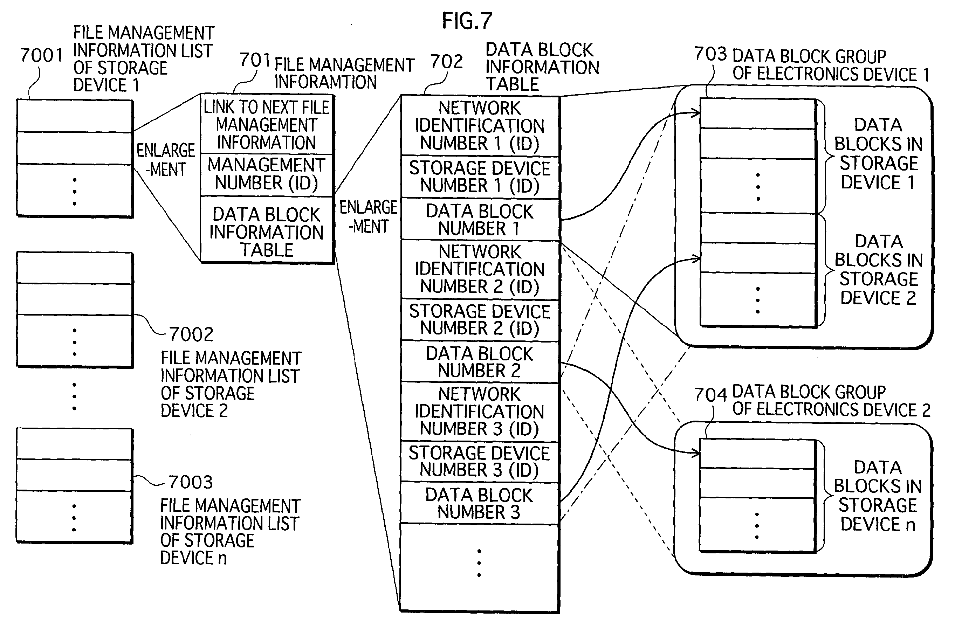

FIG.7 shows the data structure of the file management information according to the third embodiment. As FIG. 7 shows, the filemanagement information according to the third embodiment has seemingly the same data structure as the file management information 201 of the first embodiment. However, the structure of the data block information table is not the same.

That is to say, in contrast to the data structure of the data block information table 202 in which pairs of the storage device number and the data block number are arranged, the data structure of the data block information table 702 according to the third embodiment is, as FIG.7 shows, characterized by that sets of the storage device number, the data block number and the network identification number are listed in the data block information table 702.

This network identification number is used for identifying the electronics device to which the storage device relating to the storage device number, which forms a pair with the network identification number, is connected. The storage device number is used for identifying each of the plurality of the storage devices connected to the same electronics device.

The structure of the file management device according to the third embodiment, and the operation by each functional block are basically the same as those in the second embodiment.

The data block detection unit according to the third embodiment refers to the data block information table. If the network identification number indicates other electronics device, the data block detection unit detects the location information of the data block by accessing the indicated electronics device.

After the data block detection unit detects the location information of the data block, the data block access unit accesses the electronics device via the network, and accesses the data block relating to the location information.

In the second embodiment described above, data blocks relating to one file should be stored in the storage device that is connected to one electronics device because of the data structure of the file management information.

On the other hand, in the third embodiment, it is possible to specify a network identification number for each data block. Therefore, it is possible to store pieces of data included in one file into data blocks in storage devices that are connected to different electronics devices.

This realizesmore flexible filemanagement. Larger files can be managed without restrictions on the total storage capacity of the storage devices that are connected to one electronics device.

If each storage device connected to the electronics device does not have enough space for storing a file by itself, the file can be divided into pieces and stored in several electronics devices connected to each other via the network.

### 4. Practical Examples of the Present Invention

The practical examples of the present invention are described next.

### (1) File Access Control

As described in the first embodiment, the replacement of the storage devices becomes easy with the present invention. If a storage device is removed, a file whose file management information is stored only in the removed storage device can not be accessed.

This is because if it is impossible to refer to the file management information, it is impossible to know the location of the data block that stores the data relating to the file. Therefore, even if all the data blocks relating to the file are stored in a storage device that is not removed, it is impossible to access the data.

With such technical characteristics of the file management device according to the present invention, security protection functions described next can be realized by any of the above-described first to third embodiments.

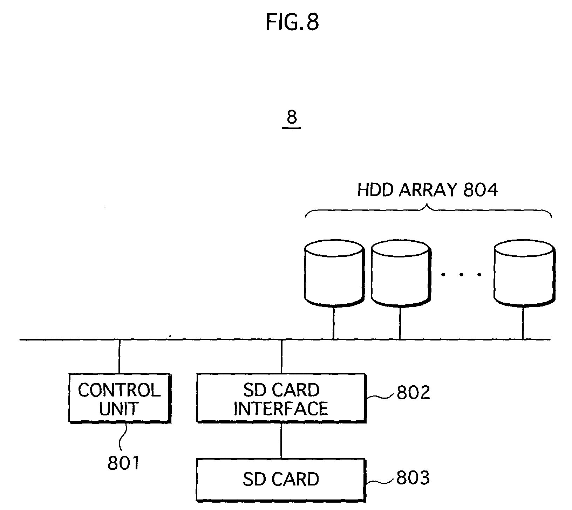

FIG.8 shows an example device structure of the file management device according to the practical example. As FIG.8 shows, a file management device 8 according to the practical example has a structure including a control unit 801, an SD card (secure digital card) interface 802, an SD card 803, and a HDD (hard disk drive) array 802, which are connected with use of a bus connection.

The control unit 801 is a functional block that performs the functions of the file management unit, the file management information detection unit, the data block detection unit and the data block access unit. The control unit 801 includes CPU (central processing unit) and so on. The SD card interface 802 is an interface used by the control unit 801 to access the SD card 803.

The SD card 803 stores the file management information specified by the user of the file management device 8. The SD card 803 can be easily removed from the SD card interface 802.

Note that in the case where a plurality of users use the file management device 8, the users may share the SD card, or each user may use his/her own SD card. In the case where a plurality of the SD cards are used, duplicate pieces of the file management information may be stored in different SD cards, regardless to the number of the users.

The HDD array 804 stores the data entity of the file and the file management information other than the file management information that is stored in the SD card 803.

With this structure, the access to the file relating to the file management information stored in the SD card becomes impossible simply by removing the SD card from the SD card interface. Therefore, the file management device can prevent the unauthorized access to the file.

### (2) Creation of Digest File

Next, a practical example in which a new file is created based on the existing file is described. In the case where the file managed by the file management device of the present invention is a movie file or a music file, the file management device can create a digest file based on such an existing file.

Upon receiving a digest-file creation request including a specification of the original file, the file management device reads out necessary data block from the specified file. Next, the file management device creates new file management information.

Then, the file management device writes the read-out data block into an empty data block, and adds its data block number and so on into the file management information.

In this way, it is easy to create a digest file of a movie file, a music file, and so on.

As a matter of course, the size of such a digest file is smaller than the original file. Therefore, the digest file can be used as a catalogue used for selling the movie and the music, by saving the digest data with the file management information in a portable storage device such as the SD card.

The file management device can also allow the purchasers of the movie file relating to the catalogue, to access the purchased file, by providing the file management information of the file to the purchasers. Especially, in the case where this practical example is applied to the above-described second or third embodiment, it is possible to realize remote access to the purchased file via a network.

### 5. Modifications

The present invention is described above based on the embodiments. However, the present invention is not limited to the embodiments as a matter of course. The following are possible modifications.
(1) Although not referred in the above-described embodiments, the data block number may be a logical address that indicates the start position of the data block, or may be a physical address.
(2) In the above-described embodiments, the present invention is described with use of the example case where the data block access is realized by specifying the storage device number. However, the present invention is not limited to this as a matter of course. In stead of or adding to this, the following modification may be performed.
   In the case where a file is stored in a storage device that uses a removal recording medium for the storage, a recording medium number may be used instead of the storage device number. This recording medium number is added into the file management information in the same way as the storage device number. This realizes appropriate file access even in the case where different recording media are sequentially set to one storage device.
(3) Although not referred in the embodiments, the file management information of one file may be stored in only one storage device. Especially, if the access to the file is desired to be restricted, it is preferable that the file management information is stored only in a removable recording medium.
   Conversely, if the file access is desired to be maintained regardless of replacement of the storage device by another device, the file management information relating to one file may be stored in a plurality of storage devices. With this structure, if the storage device that stores the file management information is removed, the file management device can access the file with reference to the file management information that is stored in the other storage device.
(4) In the above-described embodiments, the case where the file management information detection unit acquires direct location information is described as an example of acquiring the location information that is used for accessing a file. However, a method not using the data block detection, that is to say, the method where the file management information detection unit acquires the direct location information and the access unit 104accesses the file with reference to the direct location information may be used.

### 6. Technical Characteristics of the Present Invention

(1) With the present invention, it is possible to record a file and management information used for accessing the file, in different recoding media.
(2) With the present invention, in the case where the recording medium that stores the management information used for accessing the file is a removable medium, efficient file management can be realized by removing the recording medium and making the access to the file impossible.
(3) In the present invention, the management information may have a single-level structure or a plural-level structure. In the case where the management information has a single-level structure, only direct location information that realizes direct access to the file is described in the management information. In the case where the management information has a plural level structure, indirect location information that is used for accessing the file is described in the management information in addition to the direct location information.

### Industrial Applicability

In a file system of an electronics device that includes two or more different types of storage devices that use different storagemedia and different storage methods'and so on, the present invention is useful as a data management device that provides a file-access restriction mechanism and a remote file-access mechanism by storing a file in different types of portable storage devices and storing management information of the file in one storage device.

## Claims

1. A file management device that manages a file that is divided into portions and stored across a plurality of storage devices including a removable storage device that stores information in a removable recording medium thereof, the file management device comprising:
an access request receiving unit operable to receive a request for accessing the file;
a location identifying unit operable to identify, with reference to the information stored in the removal recording medium, locations of the file; and
a file access unit operable to access the locations in response to the request.

2. The file management device of Claim 1, wherein
the file is constituted of data blocks,
the file management device further comprises an identifier receiving unit operable to receive an identifier of the file and identifiers of the data blocks,
the identifier of the file that is stored across the storage devices except for the removal storage device, identifiers of the storage devices, and locations of the data blocks within the storage devices are recorded on the removable recording medium in association with each other, and
the file access unit accesses the locations of the file by specifying the locations of the data blocks and the identifiers of the storage devices with use of the identifiers of the data blocks.

3. The file management device of Claim 2, wherein
the removal recording medium has recorded thereon address information used for accessing the storage devices via a network, and
the file access unit accesses the locations of the file with use of the address information.

4. A file management method used for managing a file that is divided into portions and stored across a plurality of storage devices including a removable storage device that stores information in a removable recording medium thereof, the file management method comprising steps of:
receiving a request for accessing the file;
identifying, with reference to the information stored in the removable recording medium, locations of the file; and
accessing the locations in response to the request.

5. A file management program used for managing a file that is divided into portions and stored across a plurality of storage devices, which include a removable storage device that stores information in a removable recording medium thereof, the file management program enabling a computer to perform steps of:
receiving a request for accessing the file;
identifying, with reference to the information stored in the recording medium, locations of the file; and
accessing the locations in response to the request.

6. A file management device that controls access to a file stored in a storage device that has two or more storage units, the file management device comprising:
an access request receiving unit operable to receive a request for accessing the file;
a management information acquiring unit operable to access the storage units and acquire management information relating to the file from one of the storage units; and
an access unit operable to access the file according to the management information.

7. The file management device of Claim 6, wherein
the management information includes:
identification information used for identifying, from the storage units, file storage units across which the file is stored; and
location information that indicates locations of the file.

8. The file management device of Claim 7, wherein
the location information is indirect information, with which the file access unit can not access the file directly,
the file management device further comprises a location information acquiring unit operable to access the file storage units with reference to the indirect information, and acquire, from one of the storage units, direct location information, with which the file access unit can access the file directly, and
the access unit accesses the file according to the direct location information.

9. The file management device of Claim 7, wherein
the file storage units identified by the identification information are different from the one of the storage units which stores the management information.

10. A recording medium having recorded thereon management information, the management information comprising:
identification information used for identifying a recording medium that'stores a file; and
location information that indicates a location of the file.
